# EUROPÄISCHE PATENTANMELDUNG

(11) **EP 1 586 894 A1**
(43) Veröffentlichungstag der Anmeldung: **19.10.2005**
(21) Anmeldenummer: 05007349.3
(22) Anmeldetag: 05.04.2005
(51) Int. Cl.: G01N 30/46, G01N 30/20

(54) **Gaschromatograph mit Trennsäulen**

(30) Priorität: 14.04.2004 DE 102004018159
(71) Anmelder: Wicom GmbH, 64646 Heppenheim (DE)
(72) Erfinder: Seekamp, Heinrich, 28832 Achim (DE); Hinz, Dirk, Dr., 13509 Berlin (DE)
(74) Vertreter: Schmid, Rudolf

(57) **Zusammenfassung**

Die Erfindung betrifft einen Gaschromatograph (1) mit mehreren Trennsäulen (2), mindestens einem Injektor (3) zu einer Trennsäule (2) und mindestens einem Detektor (4), det mit dieser Trennsäule (2) für Substanzen mit Spül- oder Trägergas verbindbar ist. Eine Vielzahl Trennsäulen (2), je ein verstellbares Schaltventil (5, 6) zwischen Injektor (3) und Trennsäulen (2) und zwischen Trennsäulen (2) und Detektor (4) und gesonderte Ein- und Auslasse (9, 12) sind für Spül- oder Trägergas vorgesehen, wobei die Schaltventile (5, 6) wahlweise einstellbar sind, um durch eine der Trennsäulen (2) die Gasproben mit Spülgas zum Detektor (4) und durch die anderen Trennsäulen (2) ausschließlich Spülgas zu leiten.

## Beschreibung

Die Erfindung betrifft einen Gaschromatographen mit mehreren Trennsäulen gemäß dem Oberbegriff des Anspruchs 1.

Gaschromatographen enthalten keine Trennsäulen vom Hersteller. Bis zu 2 Trennsäulen werden vom Nutzer des Gaschromatographen eingebaut.

Bekannt ist aus der EP 0 985 928 A1 ein Gaschromatograph mit mehreren Trennsäulen in einem Ofen, von denen je eine mit je einem Injektor und einem Detektor verbunden ist hängend im Ofenraum dieses Gaschromatographen. Trennsäulen von Gaschromatographen müssen regelmäßig ausgetauscht werden, weil z. B. die Untersuchung eines Stoffgemisches eine andere Trennsäule erfordert als die Untersuchung eines anderen Stoffgemisches. Der effektive Zeitbedarf für die Untersuchung unbekannter Stoffgemische mit Gaschromatographen ist in der Praxis fast ausschließlich von der Zahl dieser Geräte abhängig, die gleichzeitig unter verschiedenen Arbeitsbedingungen betrieben werden können, denn die Trennsäule stellt das Herz der Trennung dar, auf die weitere Parameter, wie das Trägergas selbst, Trägergasgeschwindigkeiten oder Temperaturprogramme optimal eingestellt werden. Nachteilig ist es, dass der Einbau der Trennsäulen mit der jeweils erforderlichen Equilibrierung sehr zeitaufwendig ist. Zur Abhilfe dieses Nachteils schlägt die Offenbarung der EP 0 985 928 A1 vor, die Trennsäule mit dem Injektor und dem Detektor jeweils über Schnellkupplungen zu verbinden und diese auf einem Rahmen an der Ofentür oder einem Auszug aus dem Ofen eines handelsüblichen Gaschromatographen zu montieren für bessere Zugänglichkeit der Schnellkupplungen, schnelles Abkühlen und leichteren Austausch der Trennsäulen. Der Austausch von Trennsäulen bleibt aber auch bei Gaschromatographen der EP 0 985 928 A1 vorbehalten für geschultes Personal, das für Einbau, Equilibrierung und Ausbau pro Trennsäule ca. 2 h benötigt. Der Austausch von Trennsäulen bei Gaschromatographen ist also zeitaufwendig und damit kostenintensiv.

Aufgabe der Erfindung ist es, einen Gaschromatographen mit mehreren Trennsäulen zu schaffen, die schneller und damit kostengünstig für die Untersuchung eines Stoffgemisches bereit stellbar sind.

Die Lösung erfolgt gemäß der Erfindung mit einem Gaschromatographen mit mehreren Trennsäulen mit den Merkmalen des Anspruchs 1. Vorteilhafte Ausgestaltungen der Erfindung sind in den Unteransprüchen dargestellt.

Gemäß der vorliegenden Erfindung weist ein Gaschromatograph mehrere Trennsäulen, mindestens einen Injektor zu einer Trennsäule und mindestens einen Detektor, der mit dieser Trennsäule für Gasproben und Spülgas verbindbar ist, auf. Die Chromatographie Bedingungen, wie Trägergas, Flussgeschwindigkeiten oder Temperaturprogramm können im Vorfeld möglichst optimal eingestellt werden,. Erfindungsgemäß sind mehr als 4 Trennsäulen mit je einem verstellbaren Schaltventil zwischen Injektor und Trennsäulen und zwischen Trennsäulen und einem Detektor vorgesehen. Die Schaltventile leiten wahlweise durch eine der Trennsäulen die Substanzen vom Injektor zum Detektor und Spül- oder Trägergas durch die verbleibenden Trennsäulen. Vorteilhaft ergibt sich gemäß der Erfindung, dass automatisch angewählt umgeschaltet werden kann von einem Injektor zu einer der mehr als 4 Trennsäulen in dem Gaschromatographen, um durch jeweils eine andere Trennsäule die Substanzen zum Detektor zu leiten. Ein entsprechendes, verstellbares Schaltventil ist zwischen den Trennsäulen und dem Detektor angeordnet, um jeweils die Trennsäule mit den Substanzen mit dem Detektor und die verbleibenden, ausschließlich mit Spül- oder Trägergas beaufschlagten Trennsäulen zu Auslassen zu leiten, so dass manuelle Eingriffe zum Umschalten zwischen Injektor und Detektor für Untersuchungen von Substanzen in einer Vielzahl von verschiedenen Trennsäulen entbehrlich sind. Die stationären Phasen, d. h. die Beschichtung der Innenoberflächen der Kapillarsäulen, sind sauerstoff- und temperaturempfindlich. Darum müssen die nichtaktivierten Kapillarsäulen während eines Temperaturprogramms zum Schutz der stationären Phasen mit Trägergas durchspült werden. Während Flüssigchromatographen bei Raumtemperatur betrieben werden, sind Trennsäulen in Gaschromatographen im Einsatz bei Temperaturen bis zu 300° C oder darüber oder auch Temperaturen weit unter 0° C, so dass Trennsäulen auf Grund von Gasausdehnungen oder Spannungen bersten würden, wenn sie während des Betriebs des Gaschromatographen von einer Gasversorgung getrennt würden. Zwischen der Vielzahl von Trennsäulen im Gaschromatographen kann automatisch oder manuell von außen umgeschaltet werden. Ohne die Erfordernisse für manuelles Umschalten können die Trennsäulen platzsparend im Ofen des Gaschromatographen angeordnet werden.

Gemäß einer vorteilhaften Ausgestaltung der Erfindung sind die Vielzahl von Trennsäulen und die beiden Schaltventile auf einen Käfig montierbar, der mit wenigen Handgriffen in einen temperierbaren Raum eines handelsüblichen Gaschromatographen, insbesondere einen Ofen, schneller und einfacher ein- und ausbaubar ist, indem Trennsäulen und Schaltventil außerhalb des Gaschromatographen vormontiert werden können. Dies ermöglicht auch kleinen Laboratorien den Erwerb eines Gaschromatographen mit mehreren automatisch geschalteten Trennsäulen, die sich einen Extra-Gaschromatographen zur Säulenschaltung nicht zulegen würden.

Gemäß einer weiteren vorteilhaften Ausgestaltung der Erfindung sind die Schaltventile zur Inertisierung beschichtet mit einer insbesondere glasartigen Oberfläche, so dass die durch die Schaltventile geleiteten gasförmigen Substanzen beim Kontakt mit heißen Edelstahloberflächen im Schaltventil nicht zerfallen.

Gemäß einer weiteren vorteilhaften Ausgestaltung der Erfindung ist das Schaltventil zwischen Trennsäule und Detektor mit einer Heizquelle versehen, um das Schaltventil konstant auf der Temperatur des Detektors halten zu können.

Gemäß einer weiteren vorteilhaften Ausgestaltung der Erfindung sind die verstellbaren Schaltventile zur Betätigung mit je einem an den Schaltventilen vorgesehenen Schnellverschluss an einem Motor, vorzugsweise einem Schrittmotor mit für Laborgeräte kommerziell erwerbbarer Softwaresteuerung befestigt, der für günstigeren Platzbedarf und geringe Temperaturbelastung außerhalb des temperierbaren Raums angeordnet ist.

Die Erfindung wird im Folgenden anhand eines bevorzugten Ausführungsbeispiels dargestellt. Es zeigt:

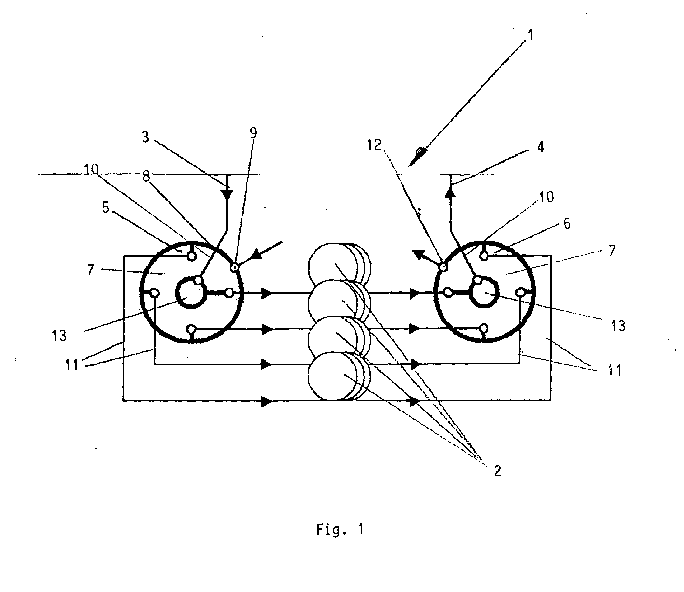

- Fig. 1: eine schematische Ansicht eines Gaschromatographen mit mehreren Trennsäulen gemäß der Erfindung.

Fig. 1: Ein Gaschromatograph 1 weist vier Trennsäulen 2, einen Injektor 3 und einen Detektor 4 auf. Ein verstellbares Schaltventil 5 ist zwischen Injektor 3 und den Trennsäulen 2 und ein verstellbares Schaltventil 6 zwischen den Trennsäulen 2 und dem Detektor 4 vorgesehen. Die Schaltventile 5, 6 leiten wahlweise Substanzen durch eine der Trennsäulen 2 vom Injektor 3 zum Detektor 4 und Spül- oder Trägergas durch die verbleibenden Trennsäulen 2. Schaltventil 6 ist mit einer externen Heizquelle (nicht dargestellt) versehen, die das Schaltventil 6 auf der Temperatur des Detektors 4 hält.

Schaltventil 5 weist einen äußeren Zylinder 7 mit Einlass 8 für Injektor 3 und Einlass 9 für Spül- oder Trägergas auf. Ein zum äußeren Zylinder 7 koaxialer, innerer Zylinder 13 ist mit Verbindungskanälen 10 von Einlass 8 zu einer Trennsäule 2 versehen. Einlass 9 ist über Kanäle 11 verbunden mit den verbleibenden Trennsäulen 2.

Schaltventil 6 ist baugleich zu Schaltventil 5. Der zum äußeren Zylinder 7 koaxiale, innere Zylinder 13 schließt über die Verbindungskanäle 10 die Trennsäule 2, die verbunden ist mit Injektor 3, an den Detektor 4 an. Auslass 12 ist über Kanäle 11 verbunden mit den verbleibenden Trennsäulen 2.

Die Schaltventile 5, 6 und Trennsäulen 2 sind auf einen Käfig (nicht dargestellt) montiert, der in einen temperierbaren Raum (nicht dargestellt) des Gaschromatographen 1, insbesondere einen Ofen, einsetzbar ist. Injektor 3 und Detektor 4 sind auf einer oberen Wandung (nicht dargestellt) des Gaschromatographen 1 montiert. Schaltventile 5, 6 sind von einem Schrittmotor (nicht dargestellt) gehalten und angetrieben.

Die Trennsäulen 2 sind platzsparend mit als Haltevorrichtungen ausgebildeten Käfigen (nicht dargestellt) aufgehängt.

### Verfahren zum Betrieb des Gaschromatographen 1

Von Injektor 3 fließen gasförmige Substanzen und Trägergas durch Verbindungskanäle 10 des Schaltventils 5 in eine Trennsäule 2 des Gaschromatographen 1 und von da über die Verbindungskanäle 10 in Schaltventil 6 zum Detektor 4 zur Auswertung und/oder Bestimmung der Gasprobe.

Das Schaltventil 5 wird motorisch angetrieben und softwaregesteuert umgeschaltet durch Drehen des inneren, koaxialen Zylinders 13 relativ zum äußeren Zylinder 7 zu einer anderen der z. B. 4 Trennsäulen 2 des Gaschromatographen 1, um die Gasproben über das synchron umgeschaltete Schaltventil 6 von der anderen Trennsäule 2 zum Detektor 4 zu leiten. Drehen des inneren, koaxialen Zylinders 9 relativ zum äußeren Zylinder 7 schaltet schrittweise um von einer zur benachbarten der 4 Trennsäulen 2 des Gaschromatographen.

Die verbleibenden Trennsäulen 2 werden über Schaltventil 5 ausschließlich mit Spülgas beaufschlagt, das über Schaltventil 6 ausgelassen wird.

## Patentansprüche

1. Gaschromatograph (1) mit mehreren Trennsäulen (2), mindestens einem Injektor (3) zu einer Trennsäule (2) und mindestens einem Detektor (4), der mit dieser Trennsäule (2) für Substanzen mit Spül- oder Trägergas verbindbar ist, **dadurch gekennzeichnet, dass** eine Vielzahl an Trennsäulen (2), je ein verstellbares Schaltventil (5, 6) zwischen Injektor (3) und Trennsäulen (2) und zwischen Trennsäulen (2) und Detektor (4) und gesonderte Ein- und Auslasse (9, 12) für Spül- oder Trägergas vorgesehen sind, wobei die Schaltventile (5, 6) wahlweise einstellbar sind, um durch eine der Trennsäulen (2) die Gasproben mit Spülgas zum Detektor (4) und durch die anderen Trennsäulen (2) ausschließlich Spülgas zu leiten.

2. Gaschromatograph (1) gemäß Anspruch 1, **dadurch gekennzeichnet, dass** die Vielzahl an Trennsäulen (2) und die beiden Schaltventile (5, 6) auf einen Käfig montierbar sind, der in einen temperierbaren Raum eines Gaschromatographen (1), insbesondere einen Ofen, einsetzbar ist.

3. Gaschromatograph (1) gemäß Anspruch 1, **dadurch gekennzeichnet, dass** die Schaltventile (5, 6) beschichtet sind mit einer inerten Oberfläche.

4. Gaschromatograph (1) gemäß Anspruch 1, **dadurch gekennzeichnet, dass** das Schaltventil (5, 6) zwischen Trennsäule (2) und Detektor (4) mit einer Heizquelle versehen ist.

5. Gaschromatograph (1) gemäß Anspruch 2, **dadurch gekennzeichnet, dass** die Schaltventile (5, 6) mit einem Schnellverschluss an einem Motor befestigt sind, der außerhalb des temperierbaren Raums angeordnet ist.

6. Gaschromatograph (1) gemäß Anspruch 5, **dadurch gekennzeichnet, dass** der Motor als Schrittmotor mit Softwaresteuerung ausgebildet ist zur Betätigung der Schaltventile (5, 6).
